# EUROPÄISCHE PATENTSCHRIFT

(11) **EP 0 742 504 B1**
(45) Veröffentlichungstag und Bekanntmachung des Hinweises auf die Patenterteilung: **23.08.2000**
(21) Anmeldenummer: 96107452.3
(22) Anmeldetag: 10.05.1996
(51) Int. Cl.: G05B 19/4063, G05B 19/401

(54) **Einrichtung zur numerischen Steuerung einer Werkzeugmaschine oder eines Roboters**
Numerical control device for a machine-tool or a robot
Dispositif de commande numérique d'une machine-outil ou d'un robot

(30) Priorität: 11.05.1995 DE 19517377
(43) Veröffentlichungstag der Anmeldung: 13.11.1996
(73) Patentinhaber: SIEMENS AKTIENGESELLSCHAFT, 80333 München (DE)
(72) Erfinder: Schleicher, Siegfried, Dr.-Ing.,, 09113 Chemnitz (DE); Schmittele, Max, Dipl.-Ing.,, 91058 Erlangen (DE); Hertinger, Klaus, Ing.(FH),, 91056 Erlangen (DE); Hauf, Ronald, Dipl.-Ing.,, 91096 Möhrendorf (DE); Brune, Richard, Dipl.-Ing.,, 90765 Fürth (DE); Schick, Ludwig,, 91091 Grossenseebach (DE)

(56) Entgegenhaltungen:
- WO-A-84/01839
- DE-A- 3 007 735
- DE-A- 3 829 734
- US-A- 4 955 305
- US-A- 5 067 080
- PATENT ABSTRACTS OF JAPAN vol. 007, no. 156 (P-209), 8.Juli 1983 & JP 58 066808 A (KOBE SEIKOSHO KK), 21.April 1983,
- PATENT ABSTRACTS OF JAPAN vol. 011, no. 050 (M-562), 17.Februar 1987 & JP 61 214946 A (MITSUBISHI HEAVY IND LTD), 24.September 1986,

## Beschreibung

Die Erfindung bezieht sich auf eine Einrichtung zur numerischen Steuerung einer Werkzeugmaschine oder eines Roboters mit sicherheitsgerichteter Überwachung mindestens einer Achse, wobei die Lageregelung und daraus ableitbare Regelungen, wie die Drehzahl- und Geschwindigkeitsregelung, sowie Überwachungen weiterer Überwachungsgrößen in zwei Kanälen getrennte Prozessoren und getrennte Istwerterfassungssysteme aufweisen.

Eine solche Einrichtung ist prinzipiell aus der EP-A-0 658 832 bekannt. Dieser Stand der Technik beschreibt eine sicherheitsgerichtete Achspositionsüberwachung, bei welcher der Einsatz bis dato notwendiger Endlagenschalter wegfällt. Diese Lösung ist einsetzbar, wenn am Antrieb zwei unterschiedliche Positionserfassungsysteme, also ein Absolut- und ein Inkrementalsystem, angreifen.

Durch das Absolutsystems für einen ersten Positionserfassungskanal wird nach dem Einschalten sofort der Zustand "referenziert" erreicht und zwar ohne Achsbewegung zu einem Referenzpunkt. Der so ermittelte Einschaltanfangswert ist als absoluter Meßwert auf den Achsnullpunkt bezogen.

Im zweiten Positionserfassungskanal wird dabei ein Inkrementalsystem eingesetzt, bei dem nach dem Steuerungseinschalten der Zustand "referenziert" erst durch Setzen des im ersten Kanal ermittelten absoluten Istwertes erreicht wird. Für das damit in den Zustand "referenziert" gesetzte Inkrementalsystem ist nun der Meßwert auch auf den Achsnullpunkt bezogen. Im weiteren wird im inkrementalen Kanal für jeden neuen Meßzeitpunkt dann der aktuelle absolute Meßwert durch Zuaddieren des jeweils neu ermittelten Inkrementwertes gewonnen.

Weil die heute bekannten Absolutmeßsysteme nur eine geringe Auslesehäufigkeit aufweisen, kann ihr absoluter Meßwert nur in diesen großen Zeitabständen verarbeitet werden. Die Folge ist, daß die damit realisierten Regelungen oder Überwachungen nicht sehr dynamisch sind, d.h. große Totzeiten aufweisen. Die hochdynamischen Lageregelungen und die digitalen Drehzahlregelungen in modernen numerischen Steuerungssystemen werden deshalb ausschließlich mit inkrementaler Meßwerterfassung ausgeführt. Ein Absolutgeber wird dabei nur beim Einschalten der Steuerung zum Referenzieren des Inkrementalsystems benutzt.

Beim gattungsbildenden Stand der Technik müßte daß der Absolutgeber so angebaut werden, daß sein Nullpunkt mechanisch auf dem Achsnullpunkt sitzt und er selbst immer fehlerfrei arbeitet. Die beschriebenen Fehleraufdeckungsmaßnahmen sind nämlich nicht dafür ausgelegt, einen Anbaufehler oder einen Geberfehler, der einen konstanten Versatz produziert, aufzudecken.

Die heute gebräuchliche Praxis ist aber, den Absolutgeber ohne Berücksichtigung des Übereinanderliegens von Achsnullpunkt und Gebernullpunkt anzubauen. Bei der Inbetriebnahme wird dann der Absolutoffset als Abstand des Absolutgebernullpunkts zum Achsnullpunkt ermittelt und gespeichert. Beim eigentlichen Meßvorgang wird zur Ermittlung des absolutem Positionswertes nun der gespeicherte Absolutoffset dem Meßwert des Absolutgebers zuaddiert.

Die Sicherheit der seit langem geläufigen Lösung mit Endschaltern kann somit von der eingangs genannten Einrichtung für die gewünschte leichte Gebermontage nicht voll erreicht werden.

Nun könnten zwar bei Wegfall der Endschalter und freier Gebermontage Absolutgeber mit höherer Auslesehäufigkeit verwendet werden, was einen hohen technischen Aufwand bedeuten würde, oder es ist ein völlig neuer Lösungsweg zu beschreiten, bei der die gegebene Auslesehäufigkeit der üblichen Absolutgeber die angestrebte Sicherheit bietet. Für höchste Sicherheitserfordernisse, wie sie die deutsche Berufsgenossenschaft fordert, muß ferner ein fehlerhafter Positionsistwert des Absolutgebers, dessen Ursache in einem fehlerbehafteten Absolutoffset oder Geberfehler liegt, sicher erkannt werden.

Aufgabe der vorliegenden Erfindung ist es, bei einer Einrichtung der eingangs genannten Art eine höchste Sicherheit zu gewährleisten, ohne daß besondere Gebersysteme neu zu entwickeln sind.

Da der Wegfall von Endlagenschalter ganz generell vorteilhaft ist, kann dieser Nutzen für beliebige Geberanbauorte an der Achse (direkt, indirekt, oder halb direkt/halb indirekt) und beliebige Geberkombinationen (Absolutgeber/Absolutgeber, Inkrementalgeber/Inkrementalgeber und gemischt Absolutgeber/ Inkrementalgeber aber auch Inkrementalgeber/Absolutgeber) realisiert werden.

Gemäß der Erfindung wird die obengenannte Aufgabe durch das Kennzeichen des Hauptanspruchs gelöst.

Dabei ist es durch die Erfindung auch möglich, daß die bislang notwendigen Endschalter auch dann wegfallen können, wenn nur Inkrementalgeber zum Einsatz kommen, weil dann für die Überwachung die gleiche Dynamik wie bei den hochdynamischen Lageregelungen und digitalen Drehzahlregelungen in modernen numerischen Steuerungssystemen erreicht werden kann.

Es ist auch sehr vorteilhaft, daß die bislang notwendigen Endschalter auch dann wegfallen können, wenn der Anbauort beider Inkrementalgeber nicht mehr auf den Antrieb beschränkt ist, sondern frei nach den gegebenen Erfordernissen von Maschine und den auch noch damit zu realisierenden Regelsystemen wird.

Neben dem Wegfall der bislang notwendiger Endlagenschalter ist es von weiterem großem Vorteil, daß auch weitere bislang notwendige neben der numerischen Steuerung separat realisierte sicherheitsgerichtete Achsüberwachungen, wie für sicheren Achsstillstand, sichere Einrichtegeschwindigkeit oder auch das Überwachen einer technologischen Drehzahlbegrenzung oder Geschwindigkeit als separate Baugruppen wegfallen können.

Weitere vorteilhafte Ausgestaltungen der Erfindung entsprechend den Unteransprüchen werden im Zusammenhang mit zwei Ausführungsbeispielen noch herausgearbeitet.
- FIG 1: ein erstes Blockschaltbild und
- FIG 2: ein zweites Blockschaltbild

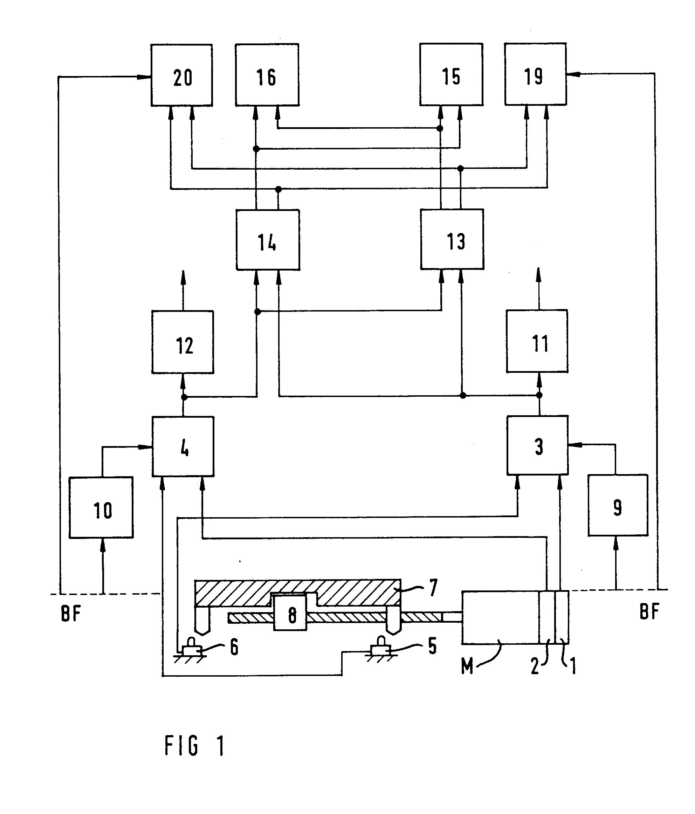

Im mit Signalflußpfeilen versehenen Blockschaltbild gemäß FIG 1 ist ein Motor M gezeigt, an dem sich zwei rotatorische Inkrementalgeber 1 und 2 befinden, deren Ausgänge auf zwei kanaleigene Istwerteinheiten 3 bzw. 4 geführt sind, deren Ausgänge mit kanaleigenen Überwachungen 11 und 12 verbunden sind. Die Kanalstruktur ist durch eine strichpunktierte Linie angedeutet. An der vom Motor M angetriebenen Achse sind zwei voneinander unabhängige Referenzpunktschalter 5 und 6 so angeordnet, daß sie zum quasi gleichen Zeitpunkt schalten, wenn ein in Achsrichtung über eine Mutter 8 auf einer angetriebenen Spindel bewegbarer Tisch 7 sie anfährt. Die Ausgänge der Referenzpunktschalter 5 und 6 sind jeweils auf eine kanalweise zugeordnete Istwerterfassungseinheit 3 bzw. 4 geführt. Bei der Inbetriebnahme wird für jede Anbaustelle/ Schaltstelle der beiden Referenzpunktschalter 5 bzw. 6 die absolute Achs-Istposition ermittelt und in zugeordneten Speichern 9 und 10 als Referenzpunktwert für die Schaltstelle und gleichzeitig als bekannte Achs-Istposition zum sicherheitsgerichteten Nachprüfen gespeichert, deren Ausgänge auf die beiden Istwerterfassungseinheiten 3 und 4 geführt sind. In den Speichern 9 und 10 sind ferner Parameter, z.B. zum Auflösungsverhalten der Inkrementalgeber 1 und 2, sowie auch Soll-Werte des Systems, insbesondere Sollagen, abgelegt.

Beim Einschalten der numerischen Steuerung steht der Tisch an der Ausschaltstelle, die beispielsweise rechts vom Referenzpunktschalter definiert sei. Beim üblicherweise durchzuführenden Referenzieren der Achse "mit Referenzpunktfahrt" wird diese auf den Referenzpunktnocken gefahren und angehalten. Wenn das Schaltsignal von Referenzpunktschalter 5 und 6 in den Istwerterfassungseinheiten 3 und 4 eintrifft, wird der zur Schaltstelle bekannte absolute Achs-Istpositionswert aus den Speichern 9 und 10 ausgelesen und damit das Inkrementalsystem 3 und 4 auf seinen Anfangswert gesetzt. Im weiteren wird für jeden neuen Meßzeitpunkt dann der aktuelle absolute Meßwert durch Zuaddieren des jeweils neu ermittelten Inkrementalwertes vom Inkrementalgeber 1 und 2 gewonnen.

Für das nachfolgende "sicherheitsgerichteten Referenzieren" des absoluten Achs-Istwertes von Istwerteinheit 3 ist hier keine spezielle Achsbewegung mehr erforderlich. Weil beide Kanäle völlig unabhängig voneinander an einer einzigen bekannten Achsstelle in den Zustand "referenziert" gebracht wurden, kann nun zum "sicherheitsgerichteten Referenzieren" der Achs-Istposition von der Istwerterfassungseinheit 3 und der Istwerterfassungseinheit 4 jeweils die absolute Istposition verwendet werden. Ermitteln die Vergleichseinheiten 13 und 14 keine Abweichung über ein vorgebbares Toleranzfeld hinaus, so wird in den Zustand "sicherheitsgerichtet referenziert" übergegangen und dieser in unabhängigen Speichern 15 und 16 gespeichert. Andernfalls erfolgt ein Rücksetzen dieser Speicher 15 und 16 mit entsprechender Fehlerreaktionsauslösung wie Verriegelung der Achsfreigabe und entsprechende Alarmanzeigen.

Die Systemblöcke 11 und 12 können beispielsweise zum Positionsüberwachen dienen, indem sie die Istlagen der Geber 1 und 2 mit Sollagen aus den Speichern 9 und 10 vergleichen.

Das erfindungsgemäße, anhand der Erfindung beschriebene Verfahren funktioniert auch für zwei bekannte Achsstellen (Referenzpunkte), die nicht genau aufeinanderliegen. Die zum "sicherheitsgerichteten Referenzieren" erforderliche Referenzfahrt zur zweiten bekannten Achsstelle wird aber selbstverständlich um so kürzer, je näher beide bekannte Achsstellen zusammenliegen.

Für die Erfindung ist es ohne Belang, auf welche Weise der Zustand "referenziert" erreicht wurde. Es kann prinzipiell ein Inkrementalgeber mittels eines weiteren Absolutgebers oder aber auch mittels eines Referenzpunktgebers oder Festanschlags referenziert werden.

Das erfindungsgemäße Verfahren funktioniert auch, wenn auf unterschiedliche Weise zur Zustand "sicherheitsgerichtet referenziert" erreicht wird. Es kann mittels eines weiteren Absolutgebers oder aber auch mittels eines weiteren Referenzpunktgebers die weitere bekannte Achsstelle, an der nachgeprüft wird, ermittelt werden.

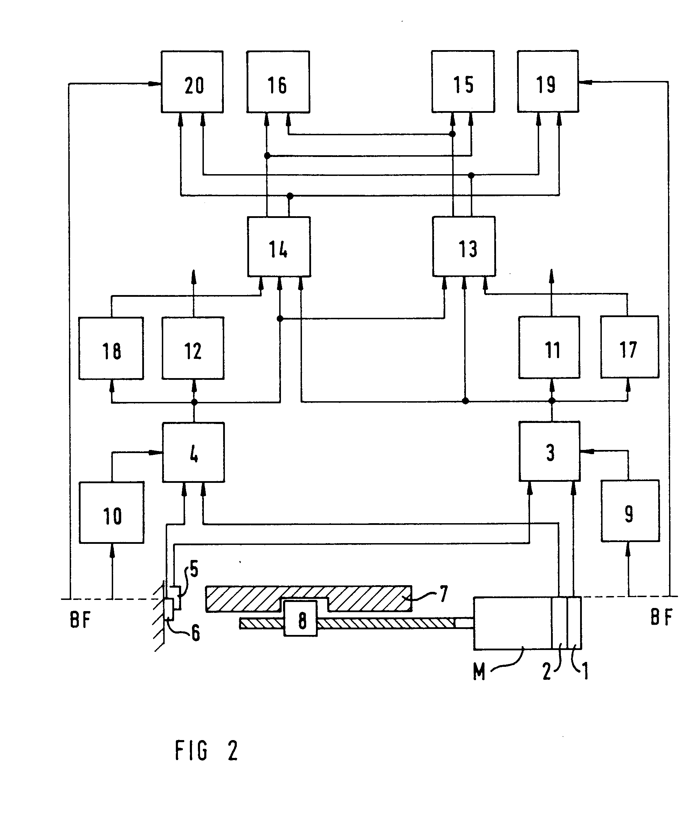

Ein zweites Ausführungsbeispiel der Erfindung ohne eine Referenzpunktfahrt wird anhand der Darstellung gemäß FIG 2 im folgenden näher erläutert. Gleiche Elemente wie bei FIG 1 sind mit gleichen Bezugszeichen versehen.

Am Motor M befinden sich ebenfalls zwei rotatorische Inkrementalgeber 1 und 2, deren Ausgänge auf die zwei Istwerterfassungseinheiten 3 und 4 geführt sind, deren Ausgänge mit den Überwachungen 11 und 12 sowie unabhängigen Speichern 17 und 18 verbunden sind. Jeweils vor dem Ausschalten der Steuerung wird der Achs-Positionswert in den unabhängigen Speichern 17 und 18 gespeichert, welcher der Stillstandspositionswert ist oder der zu erwartende Stillstandspositionswert sein wird. Nach dem Einschalten wird dann der gespeicherte Achs-Positionswert als bekannter Achs-Istpositionswert der "Nachprüf"-Achsstelle verwendet. Dieser Pufferbetrieb ist wesentlich, weil er ständig neues Referenzieren vermeidet. Das seltene Referenzieren kann so außerhalb des ständigen Arbeitsraums erfolgen. Die Zeit zum Anfahren entfernt liegender Referenzierwerte ist wegen der seltenen Fahrten unerheblich.

An der Achse ist noch ein Absolutgeber auslesbar, welcher zusammen mit seinem in Speicher 9 gespeicherten Absolutoffset auf die Istwerterfassungseinheit 3 geführt ist, wodurch diese damit in der Lage ist, das Inkrementalsystem für den Geber 1 auf den Anfangswert zu setzen, so daß dessen Istwert den Zustand "referenziert" erreicht. An der Achse ist noch ein Festanschlag vorhanden, dessen Achs-Istposition bei der Inbetriebnahme ermittelt und getrennt in die Speicherblöcke 9 und 10 eingegeben wird. Um ein erstes Mal bei der Inbetriebnahme in den Zustand "sicherheitsgerichtet referenziert" zu gelangen, wird an den Festanschlag hingefahren. Stimmt die angezeigte Achs-Istposition vom Zustand "referenziert" mit der für diese Stelle bekannten Istposition überein, drückt der Inbetriebnehmer die Eingabetasten "Zustimmung", worauf der Zustand "Zustimmung" in getrennten Speichern 19 und 20 und der Zustand "sicherheitsgerichtet referenziert" in den Speichern 15 und 16 gespeichert wird.

Hier sei bemerkt, daß ausgehend vom Bedienfeld BF nicht nur die Speicher 9 und 10 sondern auch die Speicher 19 und 20 gesetzt werden können, was beim Systemstart von Vorteil ist.

Nach jedem Einschalten erfolgt das "sicherheitsgerichtete Referenzieren" der Achs-Istposition des Inkrementalsystems vom Zustand "referenziert" immer dann automatisch, wenn der Zustand "Zustimmung" noch gespeichert ist, d.h. wenn die gespeicherte Position auch zur Einschaltstelle paßt und keine unzulässige Achsbewegung im ausgeschalteten Zustand stattfand. Andernfalls, wenn eine diesbezügliche Überprüfung ein negatives Ergebnis liefern, erfolgt ein Rücksetzen der "Zustimmung".

Für das Nachprüfen beim "sicherheitsgerichteten Referenzieren" wird hier die Einschaltstelle als Achsstelle mit bekannter Achs-Istposition gewählt. Weil im Regelfall die Achse sich im ausgeschalteten Zustand nicht bewegt wird, gibt nun der Speicherwert von 17 quasi die aktuelle absolute Achs-Istposition der Einschaltstelle an.

Da nun beim Einschalten schon an der Nachprüfstelle gestanden wird, ist bei diesem Anwendungsbeispiel für das "sicherheitsgerichtete Referenzieren" keine Achsbewegung mehr erforderlich. Ermittelt die Vergleichseinheit 13 nun keine Abweichung über ein vorgebbares Toleranzfeld hinaus, so wird in den Zustand "sicherheitsgerichtet referenziert" übergegangen und dieser in den unabhängigen Speichern 15 und 16 gespeichert. Andernfalls erfolgt ein Rücksetzen dieser Speicher 15, 16 und 17, 18 mit entsprechender Fehlerreaktionsauslösung, wie Verriegelung der Achsfreigabe und entsprechenden Alarmanzeigen. In den Zustand "Zustimmung" wird erst nach der Fehlerbehebung durch die eingangs beschrieben manuellen Nachprüfschritte mit manueller Zustimmung gelangt.
Für das vorliegende Beispiel kann das manuelle "Zustimmunggeben" automatisiert werden, indem mittels eines Referenzpunktgebers das Erreichen der Festanschlagposition signalisiert wird. Der Referenzpunktgeber wird hier durch einen Momenten-Grenzwertschalter realisiert, der bei Erreichen eines vorgebbaren Drückmoment die erreichte Festanschlagposition als Referenzposition signalisiert.

Beim Ausschalten der Steuerung werden jeweils die Zustände "referenziert" und "sicherheitsgerichtet referenziert" rückgesetzt.

Zusammenfassend seien noch einmal die wesentlichen Merkmale der Erfindung gegenüber den eingangs genannten Stand der Technik aufgeführt.
1. Beschränkung auf geringere Sicherheit infolge nicht vollständiger Fehleraufdeckung bei einem Referenzieren des gesamten Überwachungssystems ausgehend von nur einem Absolutgeber.
   Diese Beschränkung wird durch eine hinzugefügte weitere Fehleraufdeckungsmaßnahme aufgehoben. Dabei wird ein verändertes Referenzieren für beide Kanal-Istwerterfassungssysteme eingesetzt und nach erreichtem Zustand "referenziert" ein Nachprüfens der absoluten Istposition auf Fehlerfreiheit vorgenommen. Diese beiden Maßnahmen sind so beschaffen und ausgelegt, daß der Einsatz von Meßgebern in beliebiger Kombination, also auch nur zwei Inkrementalgeber, möglich ist.
   Zu den in der bekannten Lösung fehlenden Erkennungsmöglichkeiten für bestimmte Absolutpositionsfehler und die daraus hervorgehende Sicherheitseinschränkung sei noch folgendes bemerkt:
   1.1 Beschränkung auf geringere Sicherheit infolge des Referenzierens des gesamten Überwachungssystems ausgehend von nur einer Referenzierung mit Absolutgeber. Es wird das Referenzieren der beiden Überwachungskanäle, bei dem ein Absolutgeber Voraussetzung ist, aufgegeben.
   Es wird auch das Referenzieren der beiden Überwachungskanäle ausgehend von nur einer Referenzierung, die sich im einmaligen Auslesen des Absolutgebers für Referenzieren begründet, aufgegeben.
   Das veränderte sicherheitsgerichtete Referenzieren sieht vor, daß nach erreichtem Zustand "referenziert" ein Nachprüfen der ermittelten absoluten Istposition auf Fehlerfreiheit vorgenommen wird und bei positivem Ergebnis in den Zustand "sicherheitsgerichtet referenziert" übergangen wird.
   Beim Absolutgeber wird nach dem Einschalten sofort der Zustand "referenziert" erreicht und zwar ohne Achsbewegung zu einem Referenzpunkt. Der ermittelte absolute Positionsistwert ist auf den Achsnullpunkt bezogen.
   Beim Inkrementalsystem wird in den Zustand "referenziert" erst übergegangen, wenn die aktuelle Istposition auch als Datenwert verfügbar ist und als Anfangswert des Inkrementalsystems gesetzt wurde. Meist geht dem ein Hinfahren zu einem Referenzpunkt voraus. Beim eingangs genannten Stand der Technik wird der Zustand "referenziert" durch den Absolutgebersystem geliefert, wodurch keine Achsbewegung erforderlich ist.
   Für das Nachprüfen im gesamten Überwachungssystem werden, wie im einzelnen aufgezeigt wird, unabhängig vom Gebertyp immer zwei voneinander unabhängige Referenzierungen vorgenommen und zueinander überprüft. Da dieses Vorgehen nicht mehr nur auf Absolutgeber abgestellt ist, kann die Beschränkung auf eine geringe Auslesehäufigkeit des Absolutgebers umgangen werden, indem immer mit zwei Inkrementalgebern gearbeitet wird.
   Das unabhängige Nachprüfen mittels eines zweiten unabhängigen Referenzierens kann im gleichen Kanal, aber es kann auch im Zusammenwirken mit dem anderen Kanal, vorgenommen werden.
   Mit diesem erfindungsgemäßen Vorgehen werden bislang noch bestehende Sicherheitslücken geschlossen, die nachfolgend aufgezeigte Fehlerursachen haben:
   1.2 Beschränkung auf geringere Sicherheit infolge eines schon beim Einschalten bestehenden Geberfehlers (Absolut- und Inkrementalgeber).
   1.3 Beschränkung auf geringere Sicherheit infolge eines fehlerhaft ermittelten Absolutoffset bei der Absolutgeber-Inbetriebnahme oder eines stationären Verrechnungsfehlers des Absolutoffset.
   1.4 Beschränkung auf geringere Sicherheit infolge eines fehlerhaft ermittelten Referenzpunktwertes bei der Inkrementalgeber-Inbetriebnahme oder eines stationären Verrechnungsfehlers des Referenzpunktwertes.

   Das fehlerhafte Referenzieren tritt ein, wenn ein Geberfehler einen konstanten Versatz produziert oder wenn ein Absolutoffset-Fehler bzw. Fehler des Referenzpunktwertes oder Rechenfehler einen konstanten Versatz produziert.
   Die Fehlerfreiheit des absoluten Positionsistwertes muß immer erst erneut festgestellt sein, ehe die Freischaltung des Überwachungsbetriebes erfolgt.
   Die erfindungsgemäßen Maßnahmen decken nun auch solche Positionsfehler auf, welche schon beim Einschalten/Referenzieren bestehen und ihre Ursache in Geber-, Absolutoffset- bzw. Referenzpunktwerte und konstanten Rechenfehlern haben. Diese Fehler sind somit im Überwachungsbetrieb beseitigt, so daß nun eine detektierte Gleichheit der Positionsistwerte im Kanalvergleich auch tatsächlich die Fehlerfreiheit der beiden Positionsistwerte bestätigt. Die hier bislang noch bestehende Sicherheitslücke ist damit geschlossen.
   Tritt eine der genannten Fehlerursachen nun erst während der freigeschalteten Überwachungsphase auf, so führt dies zu einem Positionsistwertfehler in einem Kanal. Der kreuzweise Positionsistwertvergleich erkennt diesen Fehler durch detektierte Ungleichheit der Positionsistwerte.
   Weil der ansonsten sehr komplex wirkende Kanalvergleich die schon beim Einschalten bzw. Referenzieren vorhandenen Fehler nicht im nachhinein aufdecken kann, wurde dafür eine vorgelagerte Fehleraufdeckung geschaffen.
2. Beschränkung auf eine Kombination aus einem Absolut- und einem Inkrementalgeber.
   Diese Beschränkung ist aufgehoben. Es können Geber in beliebiger Kombination, also auch nur Inkrementalgeber oder auch nur Absolutgeber eingesetzt werden.
3. Beschränkung auf den Anbauort der Istwertgeber am Antrieb.
   Eine Beschränkung auf den Anbauort der Istwertgeber am Antrieb besteht nicht mehr, weil das erfindungsgemäße Vorgehen keine Abhängigkeit zum Meßgeberanbauort aufweist.
4. Besonderheiten der neuen gegenüber der alten Lösung.
   Die alte Lösung hat eine Sicherheitslücke. Diese wird durch das sicherheitsgerichtete Referenzieren geschlossen, welches zusätzliche Aufwendungen erfordert. Die Aufwendungen hierzu, wie zusätzliche Referenzpunktgeber und -fahrt oder auch zweiter Absolutgeber, sind von der Kombination der eingesetzten Gebertypen und benutzten Verfahrensschritte abhängig.
   Es wäre allgemein von Vorteil, wenn Referenzpunktgeber wegfallen könnten, weil ihr Bau- und Anbauaufwand mit den von Endlagenschaltern vergleichbar ist.
   Es wäre gleichfalls von ökonomischem Vorteil, wenn das Referenzpunktanfahren wegfallen würde, weil die Zeit dafür eingespart würde und eine Behinderung der Referenzpunktfahrt durch ein Werkstück oder Werkzeug nicht mehr auftritt.
   Eine neue Lösung bietet deshalb auch Varianten, bei denen keine Referenzpunktfahrt mehr erforderlich ist.
5. Beispiele für Gebervarianten.
   Es gibt heute Geber, wo in einer mechanischen Anbaueinheit mehrere Gebersysteme nebeneinander realisiert sind. Der rotatorische Heidenhaingeber EQN 1325 und auch der Lineargeber LN181 haben eine EnDat-Absoluterfassungseinheit und daneben für die beiden Inkrementalspuren A und B der Maßverkörperung noch je eine getrennte Erfassungseinheit. Auch viele übliche Inkrementalgeber haben für die beiden Inkrementalspuren A und B der Maßverkörperung jeweils eine getrennte Erfassungseinheit und liefern die beiden Spur-Abtastsignale als getrennte Rohsignale.
   5.1 Inkrementalgeber / Inkrementalgeber.
      Zwei unabhängig voneinander wirkende Referenzpunktgeber als Einzelgeber.
      Es kann mit zwei Inkrementalgebern durch zwei unabhängige Referenzpunktfahrten in den Zustand "sicherheitsgerichtete referenziert" gelangt werden. Dazu werden zwei unabhängige Referenzpunktgeber an zwei Achsstellen entweder für einen Istwerterfassungskanal oder jeweils einer je Kanal benutzt. Es sind dann zwei Referenzpunktfahren erforderlich.
      Zwei unabhängig voneinander wirkende Referenzpunktgeber als Doppelgeber.
      Sind die beiden Referenzpunktgeber als ein Doppelgeber für eine Achsstelle ausgebildet, wird der zustand "sicherheitsgerichtet referenziert" schon nach der bislang üblichen einen Referenzpunktfahrt erreicht.
      Aufwand geberseitig gering, da nur Inkrementalgeber und Referenzpunkt-Doppelgeber anstelle eines Einfachgebers erforderlich! Aufwand Referenzpunktfahrt: Unverändert zu heutigen Inkrementalgeberlösungen. Höchste Sicherheit!
   5.2 Inkrementalgeber plus Absolutgeber/Inkrementalgeber plus Absolutgeber. Aufwand geberseitig hoch, da zwei Absolutgeber. Aufwand Referenzpunktfahrt. Keine Referenzpunktfahrt und keine Referenzpunkt-Geber erforderlich! Ebenfalls höchste Sicherheit!
   5.3. Inkrementalgeber plus Absolutgeber / Inkrementalgeber.
      Aufwand gebersetig normal, Referenzpunktgeber erforderlich! Aufwand Referenzpunktfahrt. Fahrt erforderlich! Höchste Sicherheit!
   5.4 Inkrementalgeber plus Absolutgeber / Inkrementalgeber
      Aufwand geberseitig normal, ein Referenzpunktgeber erforderlich bei automatischer "Zustimmung" bei Inbetriebnahme, eine Sichtmarke erforderlich bei manueller "Zustimmung" bei Inbetriebnahme. Aufwand Referenzpunktfahrt. Keine Fahrt erforderlich, wenn gespeicherte Ausschaltposition noch richtig ist, d.h. "Zustimmung" noch vorliegt. Auch hier höchste Sicherheit!
   5.5 Inkrementalgeber / Inkrementalgeber
      Aufwand geberseitig geringer, da kein Absolutgeber mehr erforderlich. Nur wie bislang ein Referenzpunktgeber erforderlich, manuelle "Zustimmung" bei Inbetriebnahme. Aufwand Referenzpunktfahrt: Wie bislang nur eine Fahrt erforderlich, wenn Ausschaltposition gespeichert wird! Höchste Sicherheit!

Die Erfindung kann prinzipiell auch für andere Maschinen mit Sicherheitsbedürfnis verwendet werden.

## Patentansprüche

1. Einrichtung zum numerischen Steuern und sicherheitsgerichteten Positionsüberwachen einer Achse einer Werkzeugmaschine oder eines Roboters, mit getrennten Prozessor- und Positionserfassungssystemen, **gekennzeichnet** durch die folgenden Merkmale:
1.1 mindestens für ein Positionserfassungssystem (1,2,3,4,5, 6) wird nach Erreichen eines Zustandes "referenziert" noch ein weiteres sicherheitsgerichtetes Referenzieren ausgeführt,
1.2 beim sicherheitsgerichteten Referenzieren wird der Achs-Istpositionswert auf Fehlerfreiheit nachgeprüft und bei ermitteltem Fehler eine Fehlerreaktion ausgelöst,
1.3 die Fehlerfreiheit des Achs-Istpositionswertes wird an einer Achsstelle mit dafür bekanntem Achs-Istpositionswert nachgeprüft,
1.4 bei positivem Nachprüfergebnis der Zustand wird "sicherheitsgerichtet referenziert" in voneinander unabhängigen Speichern (15,16) gespeichert und bei negativem Ergebnis "sicherheitsgerichtet referenziert" in diesen Speichern (15,16) rückgesetzt.

2. Einrichtung nach Anspruch 1, **dadurch gekennzeichnet,** daß mit dem Rücksetzen des Zustandes "referenziert" für ein Positionserfassungsystem auch der Zustand "sicherheitsgerichtet referenziert" rücksetzbar ist.

3. Einrichtung nach Anspruch 1, **dadurch gekennzeichnet,** daß an einer beliebigen Achsstelle, für die der Achs-Istpositionswert bekannt ist, ein Positionserfassungssystem im Zustand "referenziert" die nachzuprüfende Istposition ermittelt, daß diese mit der bekannten Achs-Istposition dahingehend verglichen wird, ob die Vergleichsabweichung ein vorgebbares Toleranzfenster nicht überschreitet, und daß bei erfolgreichem Vergleich der Zustand "sicherheitsgerichtet referenziert" speicherbar ist.

4. Einrichtung nach Anspruch 1 oder 2, **dadurch gekennzeichnet,** daß die bekannte Achs-Istposition von einem zweiten unabhängigen Positionserfassungssystem, das im Zustand "referenziert" arbeitet, bereitstellbar ist.

5. Einrichtung nach Anspruch 3, **dadurch gekennzeichnet,** daß das zweite Positionserfassungssystem ein Inkrementalgebersystem ist, ober ein Absolutmeßsystem ist, das nach dem abstandscodiertem Prinzip arbeiten kann.

6. Einrichtung nach Anspruch 3 oder 4, **dadurch gekennzeichnet,** daß das zweite Positionserfassungssystem ein messender Taster oder ein schaltender Taster/Nocken/Referenzpunktgeber ist.

7. Einrichtung nach einem der vorstehenden Ansprüche, **dadurch gekennzeichnet,** daß zur Nachprüfung eine feste Achsstelle anfahrbar ist und daß wenn diese Position erreicht ist, die hierfür bekannte Achs-Istposition gegebenenfalls durch manuelles Ausmessen für die Nachprüfung bereitstellbar ist.

8. Einrichtung nach einem der vorstehenden Ansprüche, **dadurch gekennzeichnet,** daß die feste Achsstelle mit einer Sicht-Marke an der Achse/Achsbett versehen ist.

9. Einrichtung nach einem der vorstehenden Ansprüche, **dadurch gekennzeichnet,** daß die feste Achsstelle ein Festanschlag ist.

10. Einrichtung nach einem der vorstehenden Ansprüche, **dadurch gekennzeichnet,** daß die Achsstelle, die Einschaltstelle ist, welche sich im fehlerfreien Fall, bei dem sich die Achse im ausgeschalteten Zustand der numerischen Steuerung nicht bewegt, quasi die Ausschaltstelle ist.

11. Einrichtung nach einem der vorstehenden Ansprüche, **dadurch gekennzeichnet**, daß jeweils vor dem Ausschalten der Steuerung der Achs-Positionswert speicherbar ist, welcher der Stillstandspositionswert ist oder der zu erwartende Stillstandspositionswert sein wird, und daß nach dem Einschalten beim Nachprüfen die Einschaltstelle als Achsstelle und der gespeicherte Achs-Positionswert als bekannter Achs-Istpositionswert der Achsstelle verwendbar ist.

12. Einrichtung nach einem der vorstehenden Ansprüche, **dadurch gekennzeichnet**, daß dann, wenn die Nachprüfung positiv endet, der Zustand "Zustimmung" für eine ungestörte Vorgeschicht der Einschaltstelle sicherheitsgerichtet speicherbar ist, andernfalls bei negativ endender Nachprüfung der Zustand "Zustimmung" sicherheitsgerichtet rücksetzbar ist.

13. Einrichtung nach einem der vorstehenden Ansprüche, **dadurch gekennzeichnet**, daß nur bei gespeichertem Zustand "Zustimmung" die Nachprüfung vornehmbar ist.

14. Einrichtung nach einem der vorstehenden Ansprüche, **dadurch gekennzeichnet**, daß bei der Inbetriebnahme oder nach dem Beheben von Fehlern ein manuell ausgelöstes Speichern des Zustandes "Zustimmung" vornehmbar ist.

15. Einrichtung nach einem der vorstehenden Ansprüche, **dadurch gekennzeichnet**, daß festgestellte Störungen der Vorgeschichte der Einschaltstelle, wie Speicherfehler für die bekannte Achs-Istposition, der Zustand "Zustimmung" rücksetzbar ist und eine Störungssignalisation vornehmbar ist.

16. Einrichtung nach einem der vorstehenden Ansprüche, **dadurch gekennzeichnet,** daß erst im Zustand "sicherheitsgerichtet referenziert" die Achsfreigabe in der numerischen Steuerung in einer UND-Verknüpfung von beiden Prozessorsystemen freischaltbar ist.

## Claims

1. Device for the numerical control and safety-related position-monitoring of an axis of a machine tool or a robot, having separate processor and position-detecting systems, characterised by the following features:
1.1 at least for one position-detecting system (1, 2, 3, 4, 5, 6) after attaining a state "referenced" further safety-related referencing is additionally carried out;
1.2 during the safety-related referencing the actual axial position value is checked for freedom from errors and if an error is ascertained, an error reaction is triggered;
1.3 the freedom from errors of the actual axial position value is checked at one axial point with an actual axial position value known therefor;
1.4 if checking produces a positive result, the state "referenced in a safety-related manner" is stored in independent memories (15, 16) and in the case of a negative result "referenced in a safety-related manner" is reset in these memories (15, 16).

2. Device according to claim 1, characterised in that with the resetting of the state "referenced" for a position-detecting system it is also possible to reset the state "referenced in a safety-related manner".

3. Device according to claim 1, characterised in that at any axial point, for which the actual axial position value is known, a position-detecting system in the state "referenced" ascertains the actual position that is to be checked, in that the latter is compared with the known actual axial position to determine whether the comparison deviation crosses a predeterminable tolerance window or not, and in that in the case of a successful comparison the state "referenced in a safety-related manner" can be stored.

4. Device according to claim 1 or 2, characterised in that the known actual axial position can be made available by a second independent position-detecting system, which operates in the state "referenced".

5. Device according to claim 3, characterised in that the second position-detecting system is an incremental sensor system or an absolute measuring system which can operate according to the distance-coded principle.

6. Device according to claim 3 or 4, characterised in that the second position-detecting system is a measuring tracer or a switching-type tracer/cam/reference point sensor.

7. Device according to one of the preceding claims, characterised in that a fixed axial point can be approached for checking purposes, and in that when this position is reached the actual axial position known therefor can, if applicable, be made available by measuring manually for the check.

8. Device according to one of the preceding claims, characterised in that the fixed axial point is provided with a visual mark on the axis/axis bed.

9. Device according to one of the preceding claims, characterised in that the fixed axial point is a fixed stop.

10. Device according to one of the preceding claims, characterised in that the axial point is the switch-on point which in the error-free case, in which the axis does not move in the switched-off state of the numerical control, is quasi the switch-off point.

11. Device according to one of the preceding claims, characterised in that in each case before switching off the control it is possible to store the axial position value which is the standstill position value or which will be the standstill position value that is to be expected, and in that, after switching on when checking, the switch-on point can be used as the axial point and the stored axial position value can be used as the known actual axial position value of the axial point.

12. Device according to one of the preceding claims, characterised in that when the checking ends positively, the state "agreement" for an undisturbed prehistory of the switch-on point can be stored in a safety-related manner; otherwise with a negatively ending check it is possible to reset the state "agreement" in a safety-related manner.

13. Device according to one of the preceding claims, characterised in that only with the stored state "agreement" is it possible to carry out the checking.

14. Device according to one of the preceding claims, characterised in that during the start-up or after the elimination of errors it is possible to effect manually triggered storage of the state "agreement".

15. Device according to one of the preceding claims, characterised in that if disturbances of the prehistory of the switch-on point, such as storage errors for the known actual axial position, are established, it is possible to reset the state "agreement" and signal that there is a disturbance.

16. Device according to one of the preceding claims, characterised in that only when in the state "referenced in a safety-related manner" can the axis release in the numerical control be cleared in an AND-operation of the two processor systems.

## Revendications

1. Dispositif pour la commande numérique et la surveillance de position visant la sécurité d'un axe d'une machine outil ou d'un robot, comportant des systèmes de processeur et des systèmes de détection de position distincts, caractérisé par les dispositions suivantes :
1.1 on effectue au moins pour un système (1, 2, 3, 4, 5, 6) de détection de position, après qu'un état "référencé" a été atteint, encore un référencement supplémentaire visant la sécurité,
1.2 dans le référencement visant la sécurité, on vérifie que la valeur de position réelle de l'axe est exempte d'erreurs et, en cas d'erreurs déterminées, une réaction à l'erreur est déclenchée,
1.3. le fait que la valeur de position réelle de l'axe est exempte d'erreurs est vérifié sur un point de l'axe par la valeur de la position réelle de l'axe connu pour ce point,
1.4 en cas de résultats positifs de vérification l'état : "référencé du point de vue de la sécurité" est mémorisé dans des mémoires (15, 16) indépendantes l'une de l'autre et, en cas de résultat négatif, "référencé du point de vue de la sécurité" est remis à l'état initial dans ces mémoires (15, 16).

2. Dispositif suivant la revendication 1, caractérisé en ce que aussi l'état "référencé du point de vue de la sécurité" peut être remis à l'état initial par la remise à l'état initial de l'état "référencé" pour un système de détection de position.

3. Dispositif suivant la revendication 1, caractérisé en ce qu'un système de détection de position en l'état "référencé" détermine la position réelle à vérifier en un point quelconque de l'axe pour lequel la valeur de la position réelle sur l'axe est connue, en ce que cette position réelle est comparée à la position réelle connue sur l'axe pour savoir si l'écart de comparaison n'est pas supérieur à une fenêtre de tolérance qui peut être prescrite, et en ce que l'état "référencé du point de vue de la sécurité" peut être mémorisé en cas de comparaison couronnée de succès.

4. Dispositif suivant la revendication 1 ou 2, caractérisé en ce que la position réelle connue sur l'axe peut être mise à disposition par un deuxième système de détection de position indépendante qui fonctionne à l'état "référencé".

5. Dispositif suivant la revendication 3, caractérisé en ce que le deuxième système de détection de position est un système d'indicateurs à incrémentation ou un système de mesures absolues qui peut fonctionner suivant le principe du codage d'espacement.

6. Dispositif suivant la revendication 3 ou 4, caractérisé en ce que le deuxième système de détection de position est un palpeur mesurant ou un indicateur de point de référence/palpeur/came commutant.

7. Dispositif suivant l'une des revendications précédentes, caractérisé en ce que l'on peut aller à un point fixe de l'axe pour la vérification et en ce que, quand cette position est atteinte, la position réelle sur l'axe connu à cet endroit peut être mise à disposition pour la vérification le cas échéant par mesurage manuel.

8. Dispositif suivant l'une des revendications précédentes, caractérisé en ce que le point fixe de l'axe est muni d'un repère visuel sur l'axe/table de l'axe.

9. Dispositif suivant l'une des revendications précédentes, caractérisé en ce que le point fixe de l'axe est une butée fixe.

10. Dispositif suivant l'une des revendications précédentes, caractérisé en ce que le point de l'axe qui est, dans le cas exempt d'erreurs dans lequel l'axe ne se déplace pas en l'état débranché de la commande numérique, quasiment le point de débranchement.

11. Dispositif suivant l'une des revendications précédentes, caractérisé en ce qu'il est mis en mémoire chaque fois avant le débranchement de la commande la valeur de la position de l'axe qui est la valeur de la position d'arrêt ou qui sera la valeur de la position d'arrêt à laquelle on peut s'attendre, et en ce que, après le branchement, lors de la vérification, le point de branchement peut être utilisé comme point de l'axe et la valeur de la position de l'axe mémorisé peut être utilisée comme valeur connue de la position réelle sur l'axe du point de l'axe.

12. Dispositif suivant l'une des revendications précédentes, caractérisé en ce que, si la vérification se termine de manière positive, l'état "accord" peut être mémorisé du point de vue visant la sécurité pour un historique non perturbé du point de branchement, dans le cas contraire, en cas de vérification qui se termine de manière négative, l'état "accord" peut être remis à l'état initial du point de vue de la sécurité.

13. Dispositif suivant l'une des revendications précédentes, caractérisé en ce que la vérification ne peut être effectuée que lorsque l'état "accord" est mémorisé.

14. Dispositif suivant l'une des revendications précédentes, caractérisé en ce que l'on peut effectuer une mémorisation déclenchée manuellement de l'état "accord" lors de la mise en marche ou après la suppression d'erreurs.

15. Dispositif suivant l'une des revendications précédentes, caractérisé en ce que, en cas de perturbation constatée de l'historique du point de branchement, comme des erreurs de mémorisation pour la position réelle connue sur l'axe, l'état "accord" peut être remis à zéro et une signalisation de perturbation peut être effectuée.

16. Dispositif suivant l'une des revendications précédentes, caractérisé en ce que la libération de l'axe dans la commande numérique est une combinaison ET des deux systèmes de processeur n'est libérée qu'à l'état "référencé de manière visant la sécurité".
